# EUROPEAN PATENT SPECIFICATION

(11) **EP 0 868 490 B1**
(45) Date of publication and mention of the grant of the patent: **29.09.2004**
(21) Application number: 96938857.8
(22) Date of filing: 28.11.1996
(51) Int. Cl.: C09D 11/02, C09D 11/08, C09D 11/10, C09D 11/12, C09C 3/10, C09C 1/56, C09C 1/62, C09D 11/00, C09B 67/00

(54) **METHOD OF PREPARATION OF INKS**
VERFAHREN ZUR TINTENHERSTELLUNG
PROCEDE DE PREPARATION D'ENCRES

(30) Priority: 21.12.1995 AU PN728595
(43) Date of publication of application: 07.10.1998
(73) Proprietor: Tonejet Limited, Melbourn, Royston, Hertfordshire, SG8 6EE (GB)
(72) Inventor: NICHOLLS, Stephen, Lansell, Willunga, S.A. 5172 (AU)
(74) Representative: Brunner, Michael John
(86) International application number: PCT/AU1996/000759
(87) International publication number: WO 1997/023575

(56) References cited:
- EP-A- 0 540 203
- EP-A- 0 755 986
- US-A- 4 434 009
- US-A- 5 332 767
- DERWENT ABSTRACT, Accession No. 93-080593/10, Class A97, G02, A21; & JP,A,05 025 417, (SEIKO EPSON CORP), 2 February 1993.
- DERWENT ABSTRACT, Accession No. 92-335449/41, Class G02; & JP,A,04 239 065 (SEIKO EPSON CORP), 28 August 1992.

## Description

### TECHNICAL FIELD

This invention relates to inks and more particularly inks suitable for ink jet printing apparatus and to a method of producing pigments for such inks.

### BACKGROUND ART

A new ink jet printing technology has been described in WO-A-9311866 in the name of Research Laboratories of Australia Pty Limited which was published on the 24th June 1993. This process provides a means of producing variable sized droplets that contain a high concentration of particulate material. Specific advantages conveyed by this process include the ability to form droplets as small as a few micrometres while still using pigments as the colorant material. This is because the size of the droplets are controlled primarily by the voltage on an injection point plus the ability of the particles to be charged and so are not limited by the size of an ink jet nozzle. Also the colorant material is significantly concentrated in the ejected droplets. Therefore, high resolution in high density images based on light and water resistant particles can be produced.

It is known that for good performance ink used in the abovementioned ink jet devices should have a volume resistivity in excess of 10⁹ ohm.cm to allow particle ejection driven droplet formation. In addition, the conductivity of the ejecting particle must be sufficiently low so as to maintain high ink resistivity. Inks which contain a high level of conductive particles tend to be difficult to print with and show poor print stability. It is thought that this is largely because high local concentrations of these conductive particles are able to form spatially extended conductors within the system and whenever these form in the wrong places they can impair the system.

There are several commercially important marking particles that exhibit high electrical conductivity and are therefor not well suited for optimum performance in the ink jet process described in patent publication WO-A-9311866. The most important of these include carbon black, magnetic iron oxide and metallic powders but the invention is not restricted to these particles and their use as pigments in inks.

Carbon black (CI Pigment Black 7) is the most widely used black pigment in conventional printing technologies. Carbon black pigments are prepared by the incomplete combustion of organic (carbon containing) fuels. The pigment usually consists of elemental carbon in combination with residual volatile material of up to 20%, the exact composition being dependent on the fuel stock used and the method and conditions of manufacture. The surface characteristics of carbon black including the conductivity or resistivity of the particles appear to be largely dependent on the amount and type of volatile material present.

Some of the desirable properties of carbon black are that it has excellent opacity, it has a neutral black colour, it has excellent resistance to acid alkali soap and solvent, it is extremely light fast and it is relatively inexpensive.

These features make carbon black very desirable as a marking particle for many printing technologies, however, carbon black has an inherent high conductivity and the performance of carbon black inks in the abovementioned printing technology is therefore less than optimum.

Magnetic iron oxide occurs naturally as mineral magnetite. Alternatively it can be synthesised by a variety of processes such as the precipitation of hydrated ferric oxide from a solution of iron salts followed by dehydration and then reduction with hydrogen. This black pigment material is characterised by a strong permanent magnetism. Commercial uses of magnetic iron oxide include the manufacture of magnetic inks for the printing of MICR information (magnetic ink character recognition).

These magnetic iron oxide particles have a high conductivity and again while they are useful as marking particles their performance in the abovementioned ink jet printing technology is not optimum.

Metallic powders consist of metals or alloys of metals. Examples are CI Pigment Metal 2 which is an alloy of copper and zinc and CI Pigment Metal 1 which is a powdered aluminium. Applications for the printing of metallic powders include decorative marking and the printing of electrically conductive circuits. It will be realised of course that metallic powders are inherently conductive and as such do not provide optimum printing using the abovementioned ink jet printing technology.

As mentioned above the present invention is not limited to these particular particles.

It is an object of this invention to provide a method of reducing the conductivity of such pigment particles and to making inks using such reduced conductivity or increased resistivity particles.

US-A-4434009 discloses polymer-coated metallic pigments to produce paints for electrostatic painting, water-based paints, and paints for plastic products.

According to the present invention, there is provided a process of producing a non-conductive ink of a type including a colourant particle having a surface resistivity lower than 100 ohm.cm. and a non-conductive carrier liquid, the process comprising the steps of:
applying an insulative material to the surface of the colourant particles having a surface resistivity lower than 100ohm.cm., to give the colourant particles a surface resistivity greater than 125ohm.cm; and
blending the treated colourant particles with the non-conductive carrier liquid to thereby form the non-conductive ink.

It has been found that conductive particles such as carbon black, metallic iron oxide and metallic powders and others can be modified to reduce their conductivity. This is achieved by mixing the conductive pigment with a non-conductive or insulative material. A composite marking particle is thereby produced which has low electrical conductivity but which exhibits the good printing qualities of the chosen pigment.

Preferably, the electrical resistivity of the particles is increased by at least 25 ohm.cm.

Examples of the insulative materials suitable for applying to the surface of conductive pigments include polymers, waxes, organic pigments and dye stuffs.

Examples of polymers that can be used for applying to the surface of the conductive pigments include epoxy resins such as bisphenol A epoxy, novolac epoxy and cycloaliphatic epoxy; acrylic resins such as polymers and copolymers of acrylic acid and esters thereof, polymers and copolymers of methacrylic acid and esters thereof; vinyl resins such as polymers and copolymers including vinyl acetate, vinyl chloride, vinyl alcohol and vinyl butyral; alkyd resins such as oil, phenolic and rosin modified alkyds and finally modified rosin esters such as dimerised pentaerythritol rosin ester.

Examples of waxes that can be used for applying to the surface of the conductive pigments include Natural waxes such as shellac wax, beeswax, camauba wax and hydrogenated castor oil; Petroleum waxes such paraffin wax and microcrystalline wax; Mineral wax such as montan wax; Synthetic waxes including polyethylene wax, chlorinated hydrocarbon wax and amide wax.

Examples of dyestuffs that can be used for applying to the surface of the conductive pigments include basic dyes such as CI basic Blue 26; spirit soluble dyes such as CI Solvent Black 29, CI Solvent Blue 49 and CI Solvent Red 7.

Examples of organic pigments that can be used for applying to the surface of the conductive pigments include CI Pigment Yellow 1, CI Pigment Yellow 14, CI Pigment Red 48:2, CI Pigment Red 122, CI Pigment Blue 15:3 and CI Pigment Blue 18.

As an example of the range of electrical resistivity which affects the efficacy of printing it has been found that a change in resistivity from 100 ohm.cm to 125 ohm.cm provides considerable improvement. The actual improvement in performance of a particular particle may depend upon the original resistivity, the type of surface treatment or coating and the desired final properties of the ink.

Once the conductivity or resistivity modified particles have been produced the ink jet ink according to this invention may be prepared by dispersing the modified colorant particles and other components as required into a non-conductive liquid. A variety of processes can be employed for the perforation of the ink including ball mills, attritors, colloid mills, three roll mills, pearl mills and high speed dispersers.

The non-conductive liquid may be any suitable liquid with the characteristics as discussed above and may include aliphatic hydrocarbons such as hexane, cyclohexane, iso-decane, Isopar (manufactured by Exxon) and Shellsol T (manufactured by Shell); aromatic hydrocarbons such as xylene, toluene and Solvesso 100 (manufactured by Exxon); chlorinated solvents such as diethylene chloride and chloroform; silicone fluids or oils such as dimethyl polysiloxane, for instance DC 200 (manufactured by Dow Coming) and cyclic dimethyl polysiloxane, for instance DC 345 (manufactured by Dow Coming) and vegetable oils such as olive oil, safflower oil, sunflower oil, soya oil or linseed oils.

Other components which may be added into the ink include a particle charging agents, binder, viscosity stabilisers and the like.

The actual process of applying the insulative material to the surface of the particle will depend upon the type of insulative material being applied.

In the case of a non-conductive dye the dye may be dissolved in a solvent in which the particle to be surface treated is not soluble and the mixture of the dissolved dye and pigment particle can be blended such as by roll milling or the like until the dye is adsorbed onto the surface of the pigment particle. The solvent can then be driven off the particles to provide a surface modified particulate agent which can be used to then manufacture an ink.

Where the insulative material is a wax then the colorant particle can be blended with the melted wax to disperse the particles in the wax and then the dispersion allowed to cool and resolidify and then the solid material may be ground up to provide a fine particulate material which then can be used to make the inks according to this invention. A translucent wax will not affect the perceived colour of the resultant particle.

In the case of organic pigments the two materials may be ground together to produce composite particles with the desired highly insulative properties.

In the case of polymers these materials may be blended with the particles in solution or in a melted form, the surface of the particles becoming at least partially coated after drying and cooling. Also, the monomers of polymers can be blended with the particles and the polymerised thereby coating the particles with the polymer.

In each of these cases the degree of coating may be such as to not effect the desirable properties such as colour but to affect the bulk conductivity of the particles and the overall volume resistivity of the formulated ink.

It will be seen that by this invention there is produced a particle with electrical surface properties modified to the extent that they can be used as colorants in non-conductive inks for use with the aforesaid printing technology.

This generally describes the invention but to assist with understanding reference will now be made to examples which show modification of the properties of carbon black and production of inks using such modified pigments it will be realised of course that similar processes can be used for other conductive particles such as magnetic iron oxide particles and metallic powders.

### BEST MODE FOR CARRYING OUT THE INVENTION

### EXAMPLES

The carbon black particles were treated as set out in the Pigment modifications set out below.

### Pigment Modification 1

| | |
|---|---|
| Tintacarb 300 | 15g |
| Reflex Blue 3G | 3g |
| Denatured methylated spirits | 150g |

Place ingredients in 500ml ball jar
Roll on mill for 3 hours
Pour into open tray and allow slurry to air dry

### Pigment Modification 2

| | |
|---|---|
| Tintacarb 300 | 50g |
| Polyethylene AC6 | 50g |

Heat polyethylene wax to melt (100°C)
Add Tintacarb and mix with disperser for 15 minutes
Allow to cool and re-solidify

### Pigment Modification 3

| | |
|---|---|
| Example 1 (dyed pigment) | 45g |
| Irgalite blue LGLD | 15g |
| Polyethylene AC6 | 40g |

Heat polyethylene wax to melt (100°C)
Add pigment ingredients and mix with disperser for 15 minutes
Allow to cool and re-solidify

The bulk resistivity of these particles was determined against that of a carbon black control and the results are set out in the table below:

| Sample | Modification | Bulk resistivity (ohm.cm) |
|---|---|---|
| Tintacarb 300 | carbon black control | 100 |
| Pigment modification 1 | CB + dye | 125 |
| Pigment modification 2 | CB + PE wax | 200 |
| Pigment modification 3 | CB + dye + phthalo. blue + PE wax | 200 |

The modified pigments prepared as set out above were formulated into inks as set out in the examples below.

### Ink Formulations

| Ink 1 (control) | |
|---|---|
| Tintacarb 300 | 25g |
| Araldite GT 6084 | 25g |
| FOA-2 | 5g |
| DC 344 | 420g |
| 6% Nuxtra Zirconium | 25g |
| All ingredients ball milled for 72 hours | |

| Ink 2 | |
|---|---|
| Pigment Modification 1 | 25g |
| Araldite GT 6084 | 25g |
| FOA-2 | 5g |
| DC 344 | 420g |
| 6% Nuxtra Zirconium | 25g |
| All ingredients ball milled for 72 hours | |

| Ink 3 | |
|---|---|
| Pigment modification 2 | 25g |
| Araldite GT 6084 | 25g |
| FOA-2 | 5g |
| DC 344 | 420g |
| 6% Nuxtra Zirconium | 25g |
| All ingredients ball milled for 72 hours | |

| Ink 4 | |
|---|---|
| Pigment modification 3 | 25g |
| Araldite GT 6084 | 25g |
| FOA-2 | 5g |
| DC 344 | 420g |
| 6% Nuxtra Zirconium | 25g |
| All ingredients ball milled for 72 hours | |

All ink examples were tested in an ink jet printing device as described in WO-A-9311866 to image copy bond paper. Ink 1 exhibited non-uniform droplet ejection with poor dot size stability. Also, ink particles were found to plate out and coat the ejection tip causing ejection to cease after several minutes.

Inks (2), (3) and (4) all showed similar improved performance; there was no evidence of plating of the ejection tip and the ejection was uniform and controllable.
Tintacarb 300 is a carbon black CI Pigment Black 7 made by Cabot Corporation
Reflex Blue 3G is a CI Pigment Blue 18 made by Hoechst AG
Irgalite Blue LGLD is a pigment blue 15:3 made by Ciba Geigy
AC-6 is a polyethylene wax made by Allied Signal
Araldite GT 6084 is an epoxy resin made by Ciba Geigy
FOA-2 is a petroleum additive made by DuPont
6% Nuxtra Zirconium is a solution of zirconium octanoate in white spirits made by Hüls America Inc.
DC344 is a silicone fluid made by Dow Corning

Throughout this specification various indications have been given as to the scope of this invention but the invention is not limited to any one of these but may reside in two or more of these combined together. The examples are given for illustration only and not for limitation.

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

## Claims

1. A process of producing a non-conductive ink of a type including a colourant particle having a surface resistivity lower than 100 ohm.cm. and a non-conductive carrier liquid, the process comprising the steps of:
applying an insulative material to the surface of the colourant particles having a surface resistivity lower than 100ohm.cm., to give the colourant particles a surface resistivity greater than 125ohm.cm; and
blending the treated colourant particles with the non-conductive carrier liquid to thereby form the non-conductive ink.

2. A process of producing a non-conductive ink as in Claim 1, wherein the insulative material is selected from the group comprising polymers, waxes, organic pigments and dye stuffs.

3. A process of producing a non-conductive ink as in Claim 2, wherein the polymer is selected from the group comprising; vinyl resins such as polymers and copolymers including vinyl acetate, vinyl chloride, vinyl alcohol and vinyl butyral; alkyd resins such as oil, phenolic and rosin modified alkyds and finally modified rosin esters such as dimerised pentaerythritol rosin ester.

4. A process of producing a non-conductive ink as in Claim 2, wherein the wax is selected from the group comprising Natural waxes such as shellac wax, beeswax, carnauba wax and hydrogenated castor oil; Petroleum waxes such paraffin wax and microcrystalline wax; Mineral wax such as montan wax; Synthetic waxes including polyethylene wax, chlorinated hydrocarbon wax and amide wax.

5. A process of producing a non-conductive ink as in Claim 2, wherein the dyestuff is selected from the group comprising basic dyes such as CI basic Blue 26; spirit soluble dyes such as Cl Solvent Black 29, CI Solvent Blue 49 and CI Solvent Red 7.

6. A process of producing a non-conductive ink as in Claim 2, wherein the organic pigment is selected from the group comprising CI Pigment Yellow 1, Cl Pigment Yellow 14, Cl Pigment Red 48:2, CI Pigment Red 122, CI Pigment Blue 15:3 and Cl Pigment Blue 18.

7. A process of producing a non-conductive ink as in Claim 1, wherein the non-conductive carrier liquid is selected from the group comprising aliphatic hydrocarbons such as hexane, cyclohexane, iso-decane,; aromatic hydrocarbons such as, toluene; chlorinated solvents such as diethylene chloride and chloroform; and vegetable oils such as olive oil, safflower oil, sunflower oil, soya oil or linseed oils.

8. A process of producing a non-conductive ink as in Claim 1, further including adding additional components selected from the group comprising particle charging agents, binders, and viscosity stabilisers.

9. A process of producing a non-conductive ink as in Claim 1, wherein the insulative material is a non-conductive dye, the process including the steps of dissolving the dye in a solvent in which the colourant particle to be surface treated is not soluble, blending the dissolved dye and colourant particle by roll milling until the dye is adsorbed onto the surface of the colourant particle and driving off the solvent to provide a surface modified particle which can then be blended with the non-conductive carrier liquid.

10. A process of producing a non-conductive ink as in Claim 1, wherein the insulative material is a wax, the process including the steps of melting the wax, then blending the wax with the colourant particle to disperse the colourant particles in the wax and then allowing the dispersion to cool and resolidify and then grinding the blended insulative material to provide a surface modified particle which can then be blended with the non-conductive carrier liquid.

11. A process of producing a non-conductive ink as in Claim 1, wherein the insulative material is an organic pigment, the process including the step of grinding the organic pigment with the colourant particle to provide a surface modified colourant particle which can then be blended with the non-conductive carrier liquid.

12. A process of producing a non-conductive ink as in Claim 1, wherein the insulative material is a polymer, the process including the steps of dissolving the polymer in a solvent in which the colourant particle to be surface treated is not soluble, blending the colourant particles with the solution so formed, the surface of the colourant particles becoming at least partially coated with the polymer and then driving off the solvent to provide a surface modified colourant particle which can then be blended with the non-conductive carrier liquid.

13. A process of producing a non-conductive ink as in Claim 1, wherein the insulative material is a polymer, the process including the steps of melting the polymer, blending the melted polymer with then the colourant particle to disperse the particles in the polymer and then allowing the dispersion to cool and resolidify and then grinding the blended insulative material to provide a surface modified colourant particle which can then be blended with the non-conductive carrier liquid.

14. A process of producing a non-conductive ink as in Claim 1, wherein the colourant particle is of a material selected from the group comprising carbon black, magnetic iron oxide and metallic powder.

15. A non-conductive ink produced by the process of any one of Claims 1 to 14.

## Patentansprüche

1. Verfahren zur Herstellung einer nicht-leitenden Tinte einer Art, die ein Farbpigment-Teilchen mit einem spezifischen Oberflächen-Widerstand von weniger als 100 Ohm·cm und eine nicht-leitende Trägerflüssigkeit einschließt, wobei das Verfahren die Schritte umfasst:
Auftragen eines isolierenden Materials auf der Oberfläche der Farbpigment-Teilchen mit einem spezifischen Oberflächen-Widerstand von weniger als 100 Ohm·cm, um den Farbpigment-Teilchen einen spezifischen Oberflächen-Widerstand von mehr als 125 Ohm·cm zu verleihen; und
Mischen der behandelten Farbpigment-Teilchen mit der nicht-leitenden Trägerflüssigkeit, um dadurch die nicht-leitende Tinte zu bilden.

2. Verfahren zur Herstellung einer nicht-leitenden Tinte nach Anspruch 1, in dem das isolierende Material aus der Gruppe ausgewählt ist, die Polymere, Wachse, organische Pigmente und Farbstoffe umfasst.

3. Verfahren zur Herstellung einer nicht-leitenden Tinte nach Anspruch 2, in dem das Polymer aus der Gruppe ausgewählt ist, die Vinyl-Harze, wie Polymere und Copolymere, die Vinylacetat, Vinylchlorid, Vinylalkohol und Vinylbutyral einschließen, Alkyd-Harze, wie Öl-, phenolisch und Kolophonium-modifizierte Alkyde, und schließlich modifizierte Kolophoniumester, wie dimerisierten Pentaerythritkolophoniumester, umfasst.

4. Verfahren zur Herstellung einer nicht-leitenden Tinte nach Anspruch 2, in der das Wachs aus der Gruppe ausgewählt ist, die Naturwachse, wie Schellackwachs, Bienenwachs, Camaubawachs und hydriertes Rizinusöl; Erdölwachse, wie Paraffinwachs und mikrokristallines Wachs; Mineralwachs, wie Montanwachs; synthetische Wachse, einschließlich Polyethylenwaches, chlorierten Kohlenwasserstoffwachses und Amidwaches, umfasst.

5. Verfahren zur Herstellung einer nicht-leitenden Tinte nach Anspruch 2, in dem der Farbstoff aus der Gruppe ausgewählt ist, die basische Farbstoffe, wie CI Basic Blue 26, Spiritus-lösliche Farbstoffe, wie CI Solvent Black 29, CI Solvent Blue 49 und Cl Solvent Red 7 umfasst.

6. Verfahren zur Herstellung einer nicht-leitenden Tinte nach Anspruch 2, in dem das organische Pigment aus der Gruppe ausgewählt ist, die CI Pigment Yellow 1, CI Pigment Yellow 14, CI Pigment Red 48 : 2, CI Pigment Red 122, CI Pigment Blue 15 : 3 und Cl Pigment Blue 18 umfasst.

7. Verfahren zur Herstellung einer nicht-leitenden Tinte nach Anspruch 1, in dem die nicht-leitende Trägerflüssigkeit aus der Gruppe ausgewählt ist, die aliphatische Kohlenwasserstoffe, wie Hexan, Cyclohexan, Isodecan; aromatische Kohlenwasserstoffe, wie Toluol; chlorierte Lösungsmittel, wie Diethylenchlorid und Chloroform; und Pflanzeöle, wie Olivenöl, Safloröl, Sonnenblumenöl, Sojaöl oder Leinsamenöle, umfasst.

8. Verfahren zur Herstellung einer nicht-leitenden Tinte nach Anspruch 1, weiter einschließend die Zugabe zusätzlicher Komponenten, die aus der Gruppe ausgewählt sind, die Teilchenaufladungsmittel, Bindemittel und Viskositätsstabilisatoren umfasst.

9. Verfahren zur Herstellung einer nicht-leitenden Tinte nach Anspruch 1, in dem das isolierende Material ein nicht-leitender Farbstoff ist, wobei das Verfahren die Schritte einschließt: Lösen des Farbstoffs in einem Lösungsmittel, in dem das Farbpigment-Teilchen, das oberflächenbehandelt werden soll, nicht löslich ist, Mischen des gelösten Farbstoffs und des Farbpigment-Teilchens durch Walzenmahlen, bis der Farbstoff auf der Oberfläche des Farbpigment-Teilchens adsorbiert ist, und Abtreiben des Lösungsmittels, um ein Oberflächen-modifiziertes Teilchen bereitzustellen, welches dann mit der nicht-leitenden Trägerflüssigkeit gemischt werden kann.

10. Verfahren zur Herstellung einer nicht-leitenden Tinte nach Anspruch 1, in dem das isolierende Material ein Wachs ist, wobei das Verfahren die Schritte einschließt: Schmelzen des Wachses, dann Mischen des Wachses mit dem Farbpigment-Teilchen, um die Farbpigment-Teilchen in dem Wachs zu dispergieren, und dann Zulassen, dass sich die Dispersion abkühlt und wieder verfestigt, und dann Mahlen des gemischten isolierenden Materials, um ein Oberflächen-modifiziertes Teilchen bereitzustellen, das dann mit der nicht-leitenden Trägerflüssigkeit gemischt werden kann.

11. Verfahren zur Herstellung einer nicht-leitenden Tinte nach Anspruch 1, in dem das isolierende Material ein organisches Pigment ist, wobei das Verfahren den Schritt einschließt: Mahlen des organischen Pigments mit dem Farbpigment-Teilchen, um ein Oberflächen-modifiziertes Farbpigment-Teilchen bereitzustellen, das dann mit der nicht-leitenden Trägerflüssigkeit gemischt werden kann.

12. Verfahren zur Herstellung einer nicht-leitenden Tinte nach Anspruch 1, in dem das isolierende Material ein Polymer ist, wobei das Verfahren die Schritte einschließt: Lösen des Polymers in einem Lösungsmittel, in dem das Farbpigment-Teilchen, das oberflächenbehandelt werden soll, nicht löslich ist, Mischen der Farbpigment-Teilchen mit der so gebildeten Lösung, wobei die Oberfläche der Farbpigment-Teilchen zumindest teilweise mit dem Polymer überzogen wird, und dann Abtreiben des Lösungsmittels, um ein Oberflächen-modifiziertes Farbpigment-Teilchen bereitzustellen, das dann mit der nicht-leitenden Trägerflüssigkeit gemischt werden kann.

13. Verfahren zur Herstellung einer nicht-leitenden Tinte nach Anspruch 1, in dem das isolierende Material ein Polymer ist, wobei das Verfahren die Schritte einschließt: Schmelzen des Polymers, Mischen des geschmolzenen Polymers mit dem Farbpigment-Teilchen, um die Teilchen in dem Polymer zu dispergieren, und dann Zulassen, dass sich die Dispersion abkühlt und wieder verfestigt, und dann Mahlen des gemischten isolierenden Materials, um ein Oberflächen-modifiziertes Farbpigment-Teilchen bereitzustellen, welches dann mit der nicht-leitenden Trägerflüssigkeit gemischt werden kann.

14. Verfahren zur Herstellung einer nicht-leitenden Tinte nach Anspruch 1, in dem das Farbpigment-Teilchen aus einem Material ist, das aus der Gruppe ausgewählt ist, die Ruß, magnetisches Eisenoxid und Metallpulver umfasst.

15. Nicht-leitende Tinte, hergestellt durch das Verfahren nach irgendeinem der Ansprüche 1 bis 14.

## Revendications

1. Procédé consistant à produire une encre non conductrice d'un type comprenant une particule colorante ayant une résistivité de surface inférieure à 100 ohm.cm et un liquide vecteur non conducteur, le procédé comprenant les étapes consistant à :
appliquer une matière isolante sur la surface des particules colorantes ayant une résistivité de surface inférieure à 100 ohm.cm, pour donner aux particules colorantes une résistivité de surface supérieure à 125 ohm.cm ; et
mélanger les particules colorantes traitées avec le liquide vecteur non conducteur pour former de cette manière l'encre non conductrice.

2. Procédé consistant à produire une encre non conductrice selon la revendication 1, dans laquelle la matière isolante est choisie dans le groupe comprenant des polymères, des cires, des pigments organiques et des substances colorantes.

3. Procédé consistant à produire une encre non conductrice selon la revendication 2, dans lequel le polymère est choisi dans le groupe comprenant des résines vinyliques telles que des polymères et des copolymères comprenant des unités acétate de vinyle, chlorure de vinyle, alcool vinylique et butyral de vinyle ; des résines alkydes telles que des alkydes modifiées à l'huile, par du phénol et par de la colophane et enfin des esters de colophane modifiés tels que l'ester de colophane et de pentaérythritol dimérisé.

4. Procédé consistant à produire une encre non conductrice selon la revendication 2, dans lequel la cire est choisie dans le groupe comprenant des cires naturelles telles que de la cire au shellac, la cire d'abeille, la cire de carnauba et l'huile de ricin hydrogénée ; des cires de pétrole telles que de la cire de paraffine et de la cire microcristalline ; de la cire minérale telle que de la cire de montan ; des cires synthétiques comprenant de la cire de polyéthylène, de la cire d'hydrocarbure chloré et de la cire d'amide.

5. Procédé consistant à produire une encre non conductrice selon la revendication 2, dans lequel la substance colorante est choisie dans le groupe comprenant des colorants basiques tels que la référence CI bleu basique 26 ; des colorants solubles dans de l'essence tels que les références CI noir solvant 29, CI bleu solvant 49 et CI rouge solvant 7.

6. Procédé consistant à produire une encre non conductrice selon la revendication 2, dans lequel le pigment organique est choisi dans le groupe comprenant les références CI pigment jaune 1, CI pigment jaune 14, CI pigment rouge 48:2, CI pigment rouge 122, CI pigment bleu 15:3 et CI pigment bleu 18.

7. Procédé consistant à produire une encre non conductrice selon la revendication 1, dans lequel le liquide vecteur non conducteur est choisi dans le groupe comprenant des hydrocarbures aliphatiques tels que l'hexane, le cydohexane, l'isodécane ; des hydrocarbures aromatiques tels que le toluène ; des solvants chlorés tels le chlorure de diéthylène et le chloroforme ; et des huiles végétales telles que l'huile d'olive, l'huile de carthame, l'huile de tournesol, l'huile de soja ou les huiles de lin.

8. Procédé consistant à produire une encre non conductrice selon la revendication 1, comprenant en plus d'ajouter des composants supplémentaires choisis dans le groupe comprenant des agents chargeant les particules, des liants et des agents stabilisant la viscosité.

9. Procédé consistant à produire une encre non conductrice selon la revendication 1, dans lequel la matière isolante est un colorant non conducteur, le procédé comprenant les étapes consistant à dissoudre le colorant dans un solvant dans lequel la particule colorante qui doit subir le traitement de surface n'est pas soluble, à mélanger le colorant dissous et les particules colorantes par broyage avec des rouleaux jusqu'à ce que le colorant soit adsorbé sur la surface des particules colorantes et à enlever le solvant pour fournir des particules modifiées en surface qu'on peut ensuite mélanger avec le liquide vecteur non conducteur.

10. Procédé consistant à produire une encre non conductrice selon la revendication 1, dans lequel la matière isolante est une cire, le procédé comprenant les étapes consistant à faire fondre la cire, à mélanger ensuite la cire avec les particules colorantes pour disperser les particules colorantes dans la cire et à laisser ensuite la dispersion refroidir et se solidifier à nouveau et à réduire ensuite en poudre la matière isolante mélangée pour fournir des particules modifiées en surface qu'on peut ensuite mélanger avec le liquide vecteur non conducteur.

11. Procédé consistant à produire une encre non conductrice selon la revendication 1, dans lequel la matière isolante est un pigment organique, le procédé comprenant l'étape consistant à réduire en poudre le pigment organique avec les particules colorantes pour fournir des particules colorantes modifiées en surface qu'on peut ensuite mélanger avec le liquide vecteur non conducteur.

12. Procédé consistant à produire une encre non conductrice selon la revendication 1, dans lequel la matière isolante est un polymère, le procédé comprenant les étapes consistant à dissoudre le polymère dans un solvant dans lequel la particule colorante qui doit subir le traitement de surface n'est pas soluble, à mélanger les particules colorantes avec la solution ainsi formée, la surface des particules colorantes devenant au moins partiellement enduite du polymère et à enlever ensuite le solvant pour fournir des particules colorantes modifiées en surface qu'on peut ensuite mélanger avec le liquide vecteur non conducteur.

13. Procédé consistant à produire une encre non conductrice selon la revendication 1, dans lequel la matière isolante est un polymère, le procédé comprenant les étapes consistant à faire fondre le polymère, à mélanger le polymère fondu avec les particules colorantes pour disperser les particules dans le polymère et à laisser ensuite la dispersion refroidir et se solidifier à nouveau et à réduire ensuite en poudre la matière isolante mélangée pour fournir des particules colorantes modifiées en surface qu'on peut ensuite mélanger avec le liquide vecteur non conducteur.

14. Procédé consistant à produire une encre non conductrice selon la revendication 1, dans lequel la particule colorante est une matière choisie dans le groupe comprenant du noir de carbone, de l'oxyde de fer magnétique et de la poudre métallique.

15. Encre non conductrice produite au moyen du procédé de l'une quelconque des revendications 1 à 14.
